# EUROPEAN PATENT SPECIFICATION

(11) **EP 3 233 575 B1**
(45) Date of publication and mention of the grant of the patent: **22.01.2020**
(21) Application number: 14908521.9
(22) Date of filing: 19.12.2014
(51) Int. Cl.: B60R 16/027, B62D 33/067, F15B 15/14, F15B 15/16, B60G 99/00

(54) **AN ARRANGEMENT FOR MEDIA TRANSFER BETWEEN CHASSIS AND CAB IN A VEHICLE**
ANORDNUNG ZUM MEDIENTRANSFER ZWISCHEN CHASSIS UND KABINE IN EINEM FAHRZEUG
ARRANGEMENT DE TRANSFERT DE FLUIDE ENTRE LE CHÂSSIS ET LA CABINE DANS UN VÉHICULE

(43) Date of publication of application: 25.10.2017
(73) Proprietor: Volvo Truck Corporation, 405 08 Göteborg (SE)
(72) Inventor: GRANANG, Ulf, S-442 41 Kungälv (SE)
(74) Representative: Valea AB
(86) International application number: PCT/SE2014/000154
(87) International publication number: WO 2016/099342

(56) References cited:
- WO-A1-2014/070075
- DE-A1- 3 617 080
- DE-C1- 3 424 935
- JP-U- S5 858 983
- US-A- 3 381 590
- US-A- 3 847 244
- US-A- 4 024 974
- US-A1- 2007 289 439
- US-B1- 6 527 131

## Description

### TECHNICAL FIELD

The invention relates to an arrangement for media transfer, e.g. cables, wires or piping, between the chassis and the cab in a commercial vehicle, in particular for a vehicle having a tiltable cab.

### BACKGROUND

In the field of heavy motor vehicles, such as load-carrying commercial vehicles in the form of trucks or semi-tractors, it is necessary to provide bundles of conduits and corresponding connections which conduits can be arranged between, for example, hydraulic, pneumatic and/or electrical equipment in a driver's cab and the drive unit and the chassis. The conduits can be for example electrical cables which are used to connect the driver's control units to associated sensors, lamps, actuators arranged in the driver's cab or on the drive unit or chassis of the vehicle, or electrical cables for supplying electrical devices with electric current from a battery arranged in the vehicle. Other types of conduits and connections can be provided for liquids such as water tubes, hydraulic hoses and similar, which liquids which are necessary in order to provide certain functions in the vehicle. One such function is air conditioning of the driver's cab which requires liquid conduits. A further type of conduits is conduits for pneumatic components which are used for example for feeding compressed air to components such as wheel brakes.
JP S58 58983U discloses a cab tilt device of a motor vehicle exhibiting the features of the preamble of claims 1 and respectively 14, comprising two hydraulic cylinders, each one of which being supplied by hydraulic fluid.

Consequently, in load-carrying vehicles there is a need for providing bundles of conduits of various types, normally chosen from a group consisting of conduits for liquids, gases such as air, and for electrical components, or similar. These conduits are routed in certain ways in each individual vehicle according to specifications related to the type of equipment which is arranged in the vehicle. However, due to variations which occur in the specifications of each given vehicle, for example regarding the choice of engine and transmission, vehicle dimensions, the number of wheel axles, the design of the driver's cab etc., a very large number of combinations of equipment will be the result. This implies that it can be many alternatives for routing the bundles between the different associated components in the vehicle. This is a problem, since the routing of the bundles is a time consuming and costly wiring and mounting procedure for these types of conduits and connections between the cab, the drive unit and the vehicle chassis. Consequently, the manufacturing process of the vehicle in question will be unnecessarily expensive.
The routing of such bundles of conduits presents a particular problem in trucks with a driver's cab which is arranged to be tilted, i.e. which may be tipped forward in a pivotable manner for gaining access to components such as the engine and gearbox which otherwise are covered by the cab. Conduits and connections of the above-mentioned types (electrical, pneumatic, hydraulic and similar) which extend between the drive unit and the driver's cab must be designed to be flexible and to have sufficient length to permit tilting of the cab. If, for example, the conduits are too short, they may be stretched and even damaged as a result of the tipping movement of the cab. This can be solved by arranging the conduits in the form of a bundle with an additional length which is sufficient so that the cab may be tipped or tilted without stretching the bundle. However, such an increased length of the conduits leads to an unnecessarily high cost and also requires quite a substantial space in the vehicle in question. Considering the fact that the space available for bundles of conduits to and from the driver's cab is often limited, this constitutes a disadvantage.

The content of the above-mentioned conduits are often referred to as "media", and any damage to the supply of such media is highly undesirable as it may affect the operation of the vehicle. For this reason, it is important that the conduits are mounted in such a way that they are allowed to flex and bend in a predetermined manner, but without being stretched too much.

Furthermore, the development of trucks demands even more control and surveillance systems for the driver. This means that more cables and wiring are needed, which increases the size of the bundles of the media conduits extending between the cab and the chassis.

Hence it is desirable to provide an improved arrangement for routing the media conduits in order to overcome the above problems.

### SUMMARY

An object of the invention is to provide an improved arrangement for routing media conduits. The object is achieved by an arrangement according to claim 1 or by a motor vehicle according to claim 14.

The invention relates to an arrangement for media transfer, e.g. cables, wires or piping for transferring pressurized liquids, such as hydraulic oil, pressurized gases, such as air, and/or transferring electric current between the chassis and the cab of a truck having a tiltable cab. In the subsequent text, the content of the above-mentioned conduits are referred to as "media".

The invention relates to an arrangement for displacing a tiltable cab unit of a motor vehicle between a lowered and a raised position relative to a vehicle frame. The arrangement comprises a fluid actuator mountable between the vehicle frame and the cab unit, which fluid actuator is arranged to displace the cab unit between the lowered and raised positions, and an elongated conduit bundle comprising at least one media conduit. A conduit bundle can comprise multiple individual conduits, wherein each conduit is arranged to transfer a separate media. In this context the most common media include pressurized media for hydraulic and pneumatic circuits and devices or electric current for electric consumers in the cab. The at least one media conduit comprises a first section which is connectable to the vehicle frame, second section which is connectable to the cab unit, and a third section which is fitted between the above-mentioned first and second sections. The at least one conduit making up a third section of the media conduit is arranged in or on the fluid actuator.

According to a first embodiment, the at least one media conduit making up the third section is arranged in a cavity extending through the fluid actuator. The fluid actuator used can be either a piston-cylinder arrangement or a telescopic cylinder arrangement. The choice of actuator can depend on factors such as the force required for lifting the cab and/or the required lifting height. A piston-cylinder arrangement can supply the greatest lifting force, but usually comprises a single lifting stage which limits the lifting height. A telescopic cylinder arrangement can provide the greatest lifting height, which is proportional to the number of stages used, but the lifting force is reduced with each added stage.

The length of a hydraulic cylinder is the total of the stroke, the thickness of the piston, the thickness of bottom and head and the length of the connections. Often this length does not fit in the machine. In that case the piston rod can also be used as a piston barrel and a second piston rod is used. These kinds of cylinders are called telescopic cylinders. If a normal rod cylinder is termed "single stage unit", then telescopic cylinders are termed "multi-stage units" of two, three, four or more stages. The number of stages is preferably, but not necessarily, limited to 6 stages for stability reasons. In general telescopic cylinders are more expensive than normal cylinders. Most telescopic cylinders are single acting (push) and are returned by the weight of the lifted component. Double acting telescopic cylinders must be specially designed and manufactured. Telescopic cylinders are designed with a series of steel or aluminum tubes of progressively smaller diameters nested within each other. The largest diameter sleeve is called the main sleeve or barrel. The smaller inner sleeves are called the stages. The smallest stage is often called the plunger or piston rod.

The at least one media conduit arranged in the fluid actuator is preferably telescopic and can comprise at least the same number of stages as the fluid actuator. As indicated above, the at least one media conduit arranged in the fluid actuator can contain hydraulic and/or pneumatic media to be supplied to the cab. Each end of the fluid actuator comprises connectors for hydraulic and/or pneumatic media supplied through the actuator. The at least one media conduit arranged in the fluid actuator can also contain electric media. A media conduit containing electric media is extendable and retractable with the fluid actuator. Within the scope of the invention it is possible for one media to be routed through a fluid actuator on one side of the vehicle, while a second media can be routed through a fluid actuator on the other side of the vehicle, e.g. for hydraulics and air respectively. Depending on the dimensions of the smallest piston component of the fluid actuator it can also be possible to route two or three media from different sources through the same fluid actuator.

According to a second embodiment, the at least one media conduit making up the third section of the conduit bundle is mounted on the outer surface of the fluid actuator. The third conduit section can be attached to the larger end of the fluid actuator, e.g. the cylinder or the main sleeve, and extends parallel to the fluid actuator to its opposite end. In the same way as described above, an at least one media conduit for hydraulic and/or pneumatic media can be telescopic. A media conduit for electric media can be extendable and retractable together with the fluid actuator. Within the scope of the invention it is possible for one media to be routed parallel to a fluid actuator on one side of the vehicle, while a second media can be routed parallel to a fluid actuator on the other side of the vehicle, e.g. for hydraulics and air respectively. Alternatively, it is also possible to route two or three media from different sources parallel to the same fluid actuator, wherein the multiple conduits can be grouped together and/or be distributed at equispaced intervals around the outer periphery of the actuator.

The invention further relates to a motor vehicle comprising a vehicle frame, a cab unit comprising a driver's seat and which cab unit is articulated to the vehicle frame via a pivot joint and tiltable in relation to the vehicle frame between a lowered position and a raised position. The vehicle further comprises a fluid actuator mounted between the vehicle frame and the cab unit, which fluid actuator is arranged to displace the cab unit between the lowered and raised positions. Extending between the vehicle frame and the cab unit is an elongated conduit bundle comprising at least one media conduit, which conduit comprises a first section which is fitted on the vehicle frame, a second section which is fitted on the cab unit, and a third section which is fitted between the above-mentioned first and second sections. At least one media conduit making up the third section of the conduit bundle is arranged in or on the fluid actuator, as described in the text above.

The invention aims at reducing wear of cables due to uncontrolled motion of free media conduits and to overcome the problem with having an arrangement with uncontrolled stretching of the cables or wires when tilting the cab. Further advantages and advantageous features of the invention are disclosed in the following description and in the dependent claims.

### BRIEF DESCRIPTION OF THE DRAWINGS

With reference to the appended schematic drawings, below follows a more detailed description of embodiments of the invention cited as examples. In the drawings:
- Figure 1: shows a schematically indicated vehicle with an arrangement for displacing a tiltable cab unit according to the invention;
- Figure 2: shows partial section through the cab unit in Figure 1;
- Figure 3: shows a first fluid actuator according to the invention;
- Figure 4: shows a second fluid actuator according to the invention;
- Figure 5: shows a third fluid actuator according to the invention;
- Figure 6: shows a fourth fluid actuator according to the invention; and
- Figure 7: shows a fifth fluid actuator according to the invention.

### DETAILED DESCRIPTION OF EXAMPLE EMBODIMENTS OF THE INVENTION

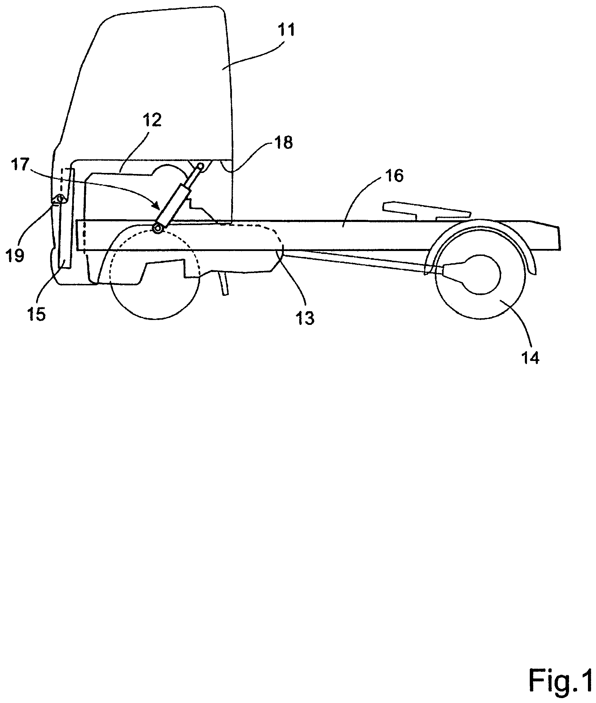

Figure 1 shows a schematically indicated vehicle 10 with an arrangement for displacing a tiltable cab unit 11 according to the invention. The vehicle 10 is provided with an internal combustion engine (ICE) 12 connected to a transmission 13 for transmitting torque to an output drive shaft (not shown) and a pair of driven wheels 14. The ICE 12 is connected to a radiator arrangement 15 for cooling engine coolant and oil from the ICE 12 and the transmission 13. In order to access the ICE 12, the transmission 13 and the radiator arrangement 15 for servicing, the cab unit 11 is tiltable between a lowered and a raised position relative to a vehicle frame 16 by means of a fluid actuator 17. Fluid actuators 17 (one shown) are mounted between the frame 16 and the underside of the floor 18 of the cab unit 11 at both sides of the frame 16. In order to allow the cab unit 11 to be tilted, a pivot joint 19 is provided adjacent the lower front and of the cab unit 11. The pivot joint 19 is arranged in a transverse direction relative to the main longitudinal extension of the vehicle 10. The fluid actuator 17 is actuated to tilt the cab unit 11, whereby the cab unit 11 is raised upwards and forwards relative to the frame 16.

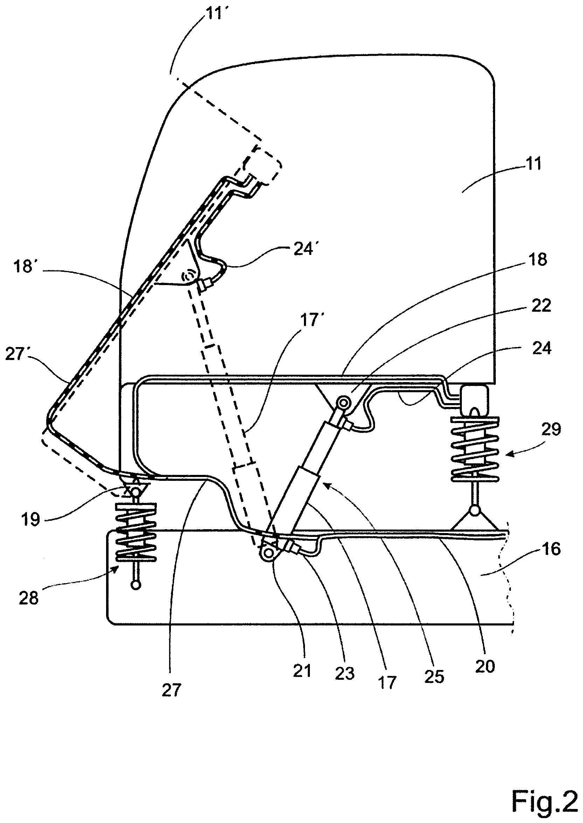

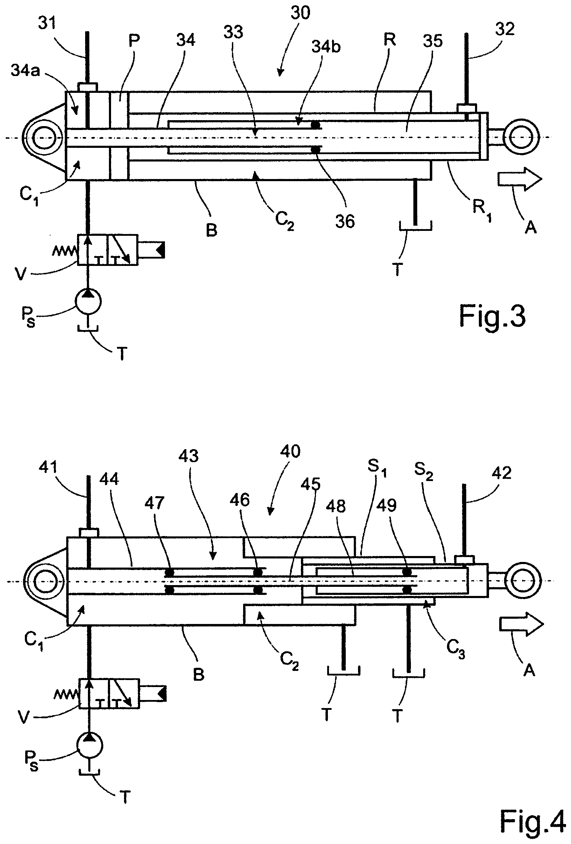

Figure 2 shows a partial section through the cab unit 11 in Figure 1, where the cab unit 11 is shown in its normal position and in its tilted position (shown in dashed lines). The cab unit 11 is mounted onto the frame 16 via damper units 28, 29 schematically indicated between the frame and the lower front and rear portions of the cab unit 11. The fluid actuator 17 is mounted between a first attachment point 21 on the frame 16 and a second pivot joint 22 on the underside of the floor 18 of the cab unit 11. In order to allow the cab unit 11 to be tilted, the ends of the fluid actuator 17 are pivotable relative to their respective attachment points 21, 22. A conduit for transferring a media, such as a hydraulic or pneumatic conduit or a conduit electric power, comprises a first section 23 which is connectable to the vehicle frame 16, a second section 24 which is connectable to the cab unit 11, and a third section 25 which is fitted between the above-mentioned first and second sections 23, 24. The first conduit extends from a media source, such as a source of hydraulic or pneumatic pressure or a source of electric power, towards the first attachment point 21 of the fluid actuator 17. The second conduit extends from the second attachment point 22 of the fluid actuator 17 to a consumer of hydraulic, pneumatic or electric power (not shown) in the cab unit 11. The fluid actuator 17 is provided with connectors for the first and second conduits 23, 24 to allow media to be supplied to the third conduit 25 within the fluid actuator 17. The conduit making up the third section 25 (indicated in dash-dotted lines) of the media conduit is arranged in the fluid actuator 17, which actuator can be a piston-cylinder arrangement (shown in Fig.3) or a telescopic cylinder (shown in Fig.4). The third section will be described in further detail below.

When a component part located under the cab unit 11 requires service, a locking means (not shown) at the rear of the cab unit is released. The fluid actuator is activated and the cab unit is displaced from its normal position, at 11, to its tilted position, at 11'.

Figure 2 also indicates the routing for an additional conduit or a conduit bundle 27 (indicated in dashed lines) not routed through the fluid actuator 17. The conduit bundle 27 extends from a media source towards the first attachment point 21 of the fluid actuator 17, together with the first conduit 23. From the first attachment point 21 the conduit bundle 27 extends forwards towards the pivot joint 19 adjacent the lower front and of the cab unit 11. From the pivot joint 19 the conduit bundle 27 extends upwards, behind a front surface of the cab unit 11 towards the floor 18 of the cab unit 11. The conduit bundle 27 then extends under the floor 18 of the cab unit 11 towards one or more media consumers, depending on which conduits are included in the conduit bundle 27. In the example shown, the conduit bundle 27 is extended to the rear of the cab unit 11, towards the same location as the second section 24 connected to the fluid actuator 17.

Figure 3 shows a first fluid actuator according to the invention. The fluid actuator used in this example is a piston-cylinder arrangement 30 comprising a cylinder B and a piston P with a hollow piston rod R. The piston-cylinder arrangement 30 is connected to a source of fluid pressure, such as a pump PS, and a controllable valve V for controlling the actuation of the fluid actuator when lifting or lowering a cab unit. The pump PS is connected to a first cavity C1 in the cylinder B on the pressure side of the piston P, while a second cavity C2 on the opposite, low pressure side of the piston P is connected to a tank T, that is, a reservoir or source of low pressure. In this text, capital letters will be used to denote component parts which are common or have a similar function in all embodiments.

A media conduit for transferring a media to a cab unit (not shown) comprises a first section 31 which is connectable to the vehicle frame, a second section 32 which is connectable to the cab unit, and a third section 33 which is fitted between the above-mentioned first and second sections 31, 32. The conduit making up the intermediate third section 33 of the media conduit is arranged in the piston-cylinder arrangement 30. The first section 31 is connected to the third section 33 via a connector on the cylinder B. An inlet portion of the third section 33 extends from the cylinder B to a tubular member 34 having a first end 34a attached to the end of the cylinder B that faces the piston P. The tubular member 34 extends through the piston P into a media cavity 35 in the hollow piston rod R, wherein the opposite, second end 34b is provided with a seal 36 around its outer periphery. The seal can be arranged between the tubular member 34 and the piston P or piston rod R at any position. The purpose of the seal 36 is to prevent pressurized media from leaking into the first cavity C1 of the cylinder B, or to prevent pressurized fluid from leaking from the first cavity C1 of the cylinder C into the media transferred through the media cavity 35. The second section 32 of the media conduit is connected to the free end R1 of the piston rod R that is connected to the cab unit. An outlet portion of the third section 33 of the media conduit extends from the media cavity 35 and through the piston rod R to be connected with the second section 32. The first and second sections 31, 32 can be connected to the piston-cylinder arrangement 30 by any suitable connector, such as a threaded connector or a quick coupling. When the piston-cylinder arrangement 30 is actuated, by pressurizing the first cavity C1, the piston P will extend in the direction of the arrow A, in order to lift a cab unit. The piston P will slide along the tubular member 34, allowing the media cavity 35 to be extended and follow the movement of the piston P and to provide an uninterrupted supply of media to the cab unit.

Figure 4 shows a second fluid actuator according to the invention. The fluid actuator used in this example is a telescopic cylinder arrangement 40 comprising a cylinder barrel B and a first and a second stage S1, S2. The telescopic cylinder arrangement 40 is connected to a source of fluid pressure, such as a pump PS, and a controllable valve V for controlling the actuation of the fluid actuator when lifting or lowering a cab unit. The pump PS is connected to a first cavity C1 in the cylinder barrel B on the pressure side of the first stage S1, while a second cavity C2 on the opposite, low pressure side of the first stage S1 is connected to a tank T. In this text, capital letters will be used to denote component parts which are common or have a similar function in all embodiments.

A media conduit for transferring a media to a cab unit (not shown) comprises a first section 41 which is connectable to the vehicle frame, a second section 42 which is connectable to the cab unit, and a third section 43 which is fitted between the above-mentioned first and second sections 41, 42. The conduit making up the intermediate third section 43 of the media conduit is arranged in the telescopic cylinder arrangement 40. The first section 41 is connected to the third section 43 via a connector on the cylinder barrel B. An inlet portion of the third section 43 extends from the cylinder barrel B to a tubular member 44 having a first end 44a attached to the end of the cylinder barrel B that faces the first stage S1. The tubular member 44 extends towards the first stage S1 and has an opposite second end 44b that supports a further tubular member 48 extending from the said second end 44b into a media cavity 45 in the second stage S2. The second end 44b is provided with a seal 46 around its inner periphery, which seal 46 is arranged between the tubular member 44 and the further tubular member 48. The purpose of the seal 46 is to prevent pressurized media from leaking into the first cavity C1 of the cylinder barrel B, or to prevent pressurized fluid from leaking from the first cavity C1 the cylinder barrel B into the media transferred through the tubular member 44. The further tubular member 48 can be provided with a stop 47 at the end extending into the tubular member 44 in order to prevent it from being pulled clear of the tubular member 44. The opposite end of the further tubular member 48 extending into the media cavity 45 in the second stage S2 is provided with a seal 49 around its inner periphery, which seal 49 prevents pressurized media from leaking into the first cavity C1 of the cylinder barrel B, or prevents pressurized fluid from leaking from the first cavity C1 the cylinder C into the media transferred through the media cavity 45. The second section 42 of the media conduit is connected to the free end of the second stage S2 that is connected to the cab unit. An outlet portion of the third section 43 of the media conduit extends from the media cavity 45 and through the second stage S2 to be connected with the second section 42. The first and second sections 41, 42 can be connected to the telescopic cylinder arrangement 40 by any suitable connector, such as a threaded connector or a quick coupling. When the telescopic cylinder arrangement 40 is actuated, by pressurizing the first cavity C1, the first and second stages S1, S2 will extend in the direction of the arrow A, in order to lift a cab unit. The first stage S1 will slide relative to the tubular member 44 and the second stage S2 will slide along the further tubular member 48, allowing the media cavity 45 to be extended and follow the movement of the first and second stages S1, S2 and to provide an uninterrupted supply of media to the cab unit.

The above Figures 3 and 4 show a fluid actuator provided with a single media conduit routed through a fluid actuator. Within the scope of the invention it is possible for one media to be routed through a fluid actuator on one side of the vehicle, while a second media can be routed through a fluid actuator on the other side of the vehicle, e.g. for hydraulics and air respectively. Depending on the dimensions of the smallest piston component of the fluid actuator it can also be possible to route two or three media from different sources through the same fluid actuator.

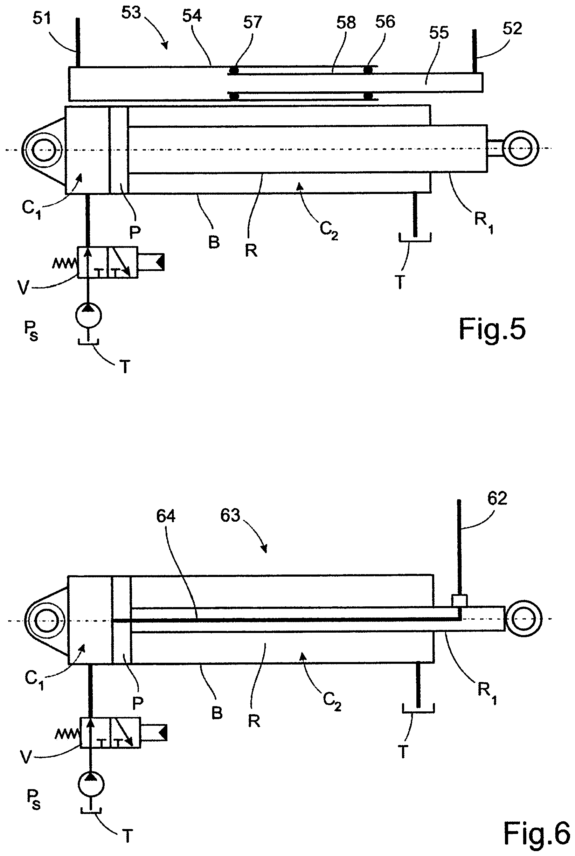

Figure 5 shows a third fluid actuator according to the invention. The fluid actuator used in this example is a piston-cylinder arrangement 50 comprising a cylinder B and a piston P with a piston rod R. The piston-cylinder arrangement 50 is connected to a source of fluid pressure, such as a pump PS, and a controllable valve V for controlling the actuation of the fluid actuator when lifting or lowering a cab unit. The pump PS is connected to a first cavity C1 in the cylinder B on the pressure side of the piston P, while a second cavity C2 on the opposite, low pressure side of the piston P is connected to a tank T. In this text, capital letters will be used to denote component parts which are common or have a similar function in all embodiments.

A media conduit for transferring a media to a cab unit (not shown) comprises a first section 51 which is connectable to the vehicle frame, a second section 52 which is connectable to the cab unit, and a third section 53 which is fitted between the above-mentioned first and second sections 51, 52. The conduit making up the intermediate third section 53 of the media conduit comprises a telescopically extendable tubular conduit 54, 58 arranged on the piston-cylinder arrangement 50 and is routed parallel to the cylinder barrel B. The first section 51 of the media conduit is connected to one end of the third section 53, 54 via a connector adjacent the end of the cylinder B. The second section 52 of the media conduit is connected to the opposite end of the third section 53, 58 via a connector adjacent the end of the piston rod R. The extendable tubular conduit 54, 58 comprises a tubular member 54 having a first end 54a attached to the end of the cylinder B adjacent the vehicle frame and an opposite, second end 54b extending towards the cab unit. The extendable tubular conduit 54, 58 also comprises a further tubular member 58 having a first end 58a arranged at the end of the piston rod R adjacent the cab unit and an opposite, second end 58b extending towards the vehicle frame. The second end 54b of the tubular member 54 is provided with a seal 56 around its inner periphery between the tubular member 54 and the second end 58b of the further tubular member 58. The purpose of the seal 56 is to prevent pressurized media from leaking out of the extendable tubular conduit 54, 58. The further tubular member 58 can be provided with a stop 57 at the end extending into the tubular member 54 in order to prevent it from being pulled clear of the tubular member 54.

The first and second sections 51, 52 can be connected to the extendable tubular conduit 54, 58 by any suitable connector, such as a threaded connector or a quick coupling. When the telescopic cylinder arrangement 50 is actuated, by pressurizing the first cavity C1, the piston P will extend in the direction of the arrow A, in order to lift a cab unit. The extendable tubular conduit 54, 58 will extend in parallel with the piston-cylinder arrangement 50, allowing the media cavity 55 to be extended and to provide an uninterrupted supply of media to the cab unit.

Figure 5 shows a fluid actuator provided with a single media conduit routed parallel to a fluid actuator. Within the scope of the invention it is possible for one media to be routed parallel to a fluid actuator on one side of the vehicle, while a second media can be routed parallel to a fluid actuator on the other side of the vehicle, e.g. for hydraulics and air respectively. Alternatively, it is also be possible to route two or three media from different sources parallel to the same fluid actuator, wherein the multiple conduits can be grouped together and/or be distributed at equispaced intervals around the outer periphery of the actuator.

Figure 6 shows a fourth fluid actuator according to the invention. The fluid actuator used in this example is a piston-cylinder arrangement 60 comprising a cylinder B and a piston P with a piston rod R. The piston-cylinder arrangement 60 is connected to a source of fluid pressure, such as a pump PS, and a controllable valve V for controlling the actuation of the fluid actuator when lifting or lowering a cab unit. The pump PS is connected to a first cavity C1 in the cylinder B on the pressure side of the piston P, while a second cavity C2 on the opposite, low pressure side of the piston P is connected to a tank T. In this text, capital letters will be used to denote component parts which are common or have a similar function in all embodiments.

In this example media is transferred to a cab unit (not shown) directly from the first cavity C1 in the cylinder B. Consequently, a first section for supplying media would be formed by the supply conduit from the pump PS. A second section 62 which is connectable to the cab unit, and a third section 63 which is fitted between the above-mentioned first cavity C1 and the second section 62. The conduit making up the intermediate third section 63 of the media conduit is arranged in the piston-cylinder arrangement 60. An inlet portion of the third section 33 extends from the cylinder B to a conduit 34 extending through the piston P and the piston rod R. The second section 32 of the media conduit is connected to the free end R1 of the piston rod R that is connected to the cab unit. An outlet portion of the third section 63 of the media conduit extends through the piston rod R to be connected with the second section 62. The second section 62 can be connected to the piston-cylinder arrangement 60 by any suitable connector, such as a threaded connector or a quick coupling. When the piston-cylinder arrangement 60 is actuated, by pressurizing the first cavity C1, the piston P will extend in the direction of the arrow A, in order to lift a cab unit. The pressurized fluid in the cavity C1 will provide an uninterrupted supply of media to the cab unit while the piston-cylinder arrangement 60 is actuated.

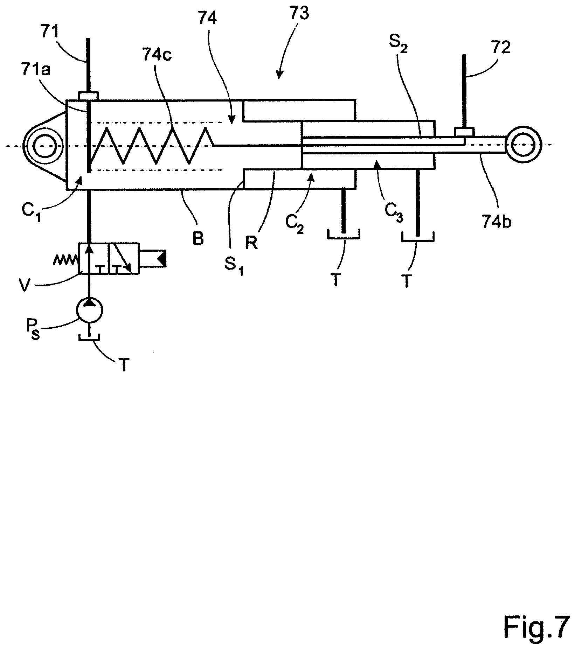

Figure 7 shows a fifth fluid actuator according to the invention. The fluid actuator used in this example is a telescopic cylinder arrangement 70 comprising a cylinder barrel B and a first and a second stage S1, S2. The telescopic cylinder arrangement 70 is connected to a source of fluid pressure, such as a pump PS, and a controllable valve V for controlling the actuation of the fluid actuator when lifting or lowering a cab unit. The pump PS is connected to a first cavity C1 in the cylinder barrel B on the pressure side of the first stage S1, while a second cavity C2 on the opposite, low pressure side of the first stage S1 is connected to a tank T. In this text, capital letters will be used to denote component parts which are common or have a similar function in all embodiments.

A media conduit for transferring electrical media, such as electric current or control signals, to a cab unit (not shown) comprises a first section 71 which is connectable to the vehicle frame, a second section 72 which is connectable to the cab unit, and a third section 73 which is fitted between the above-mentioned first and second sections 71, 72. The conduit making up the intermediate third section 73 of the media conduit is arranged in the telescopic cylinder arrangement 70. The first section 71 is connected to the third section 73 via an electrical connector on the cylinder barrel B. A portion of the third section 73 extends from the cylinder barrel B to as a conduit 64 having a first end 74a attached to the end of the cylinder barrel B that faces the piston P. The conduit 74 extends into the first stage S1 and through the second stage S2, wherein the opposite, second end 74b extends towards the free end of the second stage S2 that is connected to the cab unit. The conduit 74 has a coiled section 74c adjacent the first end 74a, which coiled section 674c is extendable and retractable with the first and second stages S1, S2. The second section 72 of the media conduit is connected by and electrical connector to the free end of the second stage S2 that is connected to the cab unit. The second end 74b of the third section 73 of the media conduit is connected with the second section 72 via the electrical connector. The first and second sections 71, 72 can be connected to the telescopic cylinder arrangement 70 by any suitable electrical connector, such as a standard or dedicated plug and socket. When the telescopic cylinder arrangement 70 is actuated, by pressurizing the first cavity C1, the first and second stages S1, S2 will extend in the direction of the arrow A, in order to lift a cab unit. The extension of the first and second stages S1, S2 will extend the coiled section 74c of the conduit 74, allowing the third section to be extended and follow the movement of the first and second stages S1, S2 and to provide an uninterrupted supply of media to the cab unit.

It is to be understood that the present invention is not limited to the embodiments described above and illustrated in the drawings; rather, the skilled person will recognize that many changes and modifications may be made within the scope of the appended claims. For instance, within the scope of the invention it is also possible to combine two or more of the above examples, wherein a fluid actuator can comprise at least one conduit passing through the actuator combined with at least one conduit extending parallel to the fluid actuator. It should be noted that the fluid actuators are only schematically illustrated for clarity and the arrangement of pressure sources, controlling valves and tanks are only exemplary. The arrangement of seals, extendable media cavities, stops and other components can be varied within the scope of the invention.

## Claims

1. Arrangement for displacing a tiltable cab unit (11) of a motor vehicle between a lowered and a raised position relative to a vehicle frame (16), the arrangement comprising a fluid actuator mountable between the vehicle frame (16) and the cab unit (11), which fluid actuator (17) is arranged to displace the cab unit (11) between the lowered and raised positions, and an elongated conduit bundle (20) comprising at least one media conduit (23, 24, 25) having a first section (23; 31; 41; 51; 71) which is connectable to the vehicle frame (16), a second section (24; 32; 42; 52; 62) which is connectable to the cab unit (11), **characterized in that** said at least one media conduit (23, 24, 25) comprises a third section (25; 33; 43; 53; 63) which is fitted between the above-mentioned first and second sections (23; 31; 41; 51; 71, 24; 32; 42; 52; 62; 72), wherein at least one conduit making up a third section (25; 33; 43; 53; 63) of the media conduit (23, 24, 25) is arranged in or on the fluid actuator (17; 30; 40; 50; 60).

2. Arrangement according to claim 1, **characterized in that** at least one media conduit making up the third section (25; 33; 43; 63) is arranged in a cavity extending through the fluid actuator.

3. Arrangement according to claim 1 or 2, **characterized in that** the fluid actuator is a piston-cylinder arrangement (30; 50).

4. Arrangement according to claim 1 or 2, **characterized in that** the fluid actuator is a telescopic cylinder (40; 60).

5. Arrangement according to any one of the above claims, **characterized in that** the at least one media conduit (34; 44, 48; 54; 64) arranged in the fluid actuator is telescopic.

6. Arrangement according to claim 5, **characterized in that** the at least one telescopic media conduit (44, 45) comprises the same number of stages (S1, S2) as the fluid actuator (40).

7. Arrangement according to any one of the above claims, **characterized in that** the at least one media conduit arranged in the fluid actuator contains hydraulic and/or pneumatic media.

8. Arrangement according to claim 3, **characterized in that** each end of the fluid actuator comprises connectors for hydraulic and/or pneumatic media supplied through the actuator.

9. Arrangement according to any one of the above claims, **characterized in that** the at least one media conduit arranged in the fluid actuator contains electric media.

10. Arrangement according to claim 9, **characterized in that** the media conduit containing electric media is extendable and retractable with the fluid actuator.

11. Arrangement according to any one of the above claims, **characterized in that** at least one media conduit making up the third section (24) of the conduit bundle (20) is mounted on the outer surface of the fluid actuator.

12. Arrangement according to claim 11, **characterized in that** the at least one media conduit is telescopic and arranged parallel to the fluid actuator.

13. Arrangement according to claim 11 or 12, **characterized in that** the at least one media conduit is extendable and retractable with the fluid actuator.

14. Motor vehicle comprising a vehicle frame (16); a cab unit (11) which comprises a driver's seat and which is articulated to the vehicle frame (16) via a pivot joint (19) and tiltable in relation to the vehicle frame (16) between a lowered position and a raised position; a fluid actuator (17) mounted between the vehicle frame (16) and the cab unit (11), which fluid actuator (17) is arranged to displace the cab unit (11) between the lowered and raised positions, and an elongated conduit bundle (20) comprising at least one media conduit, such a conduit having a first section (23; 31; 41; 51; 71) which is fitted on the vehicle frame (16), a second section (24; 32; 42; 52; 62) which is fitted on the cab unit (11), **characterized in that** said at least one media conduit (23, 24, 25) comprises a third section (25; 33; 43; 53; 63) which is fitted between the above-mentioned first and second sections (23; 31; 41; 51; 71, 24; 32; 42; 52; 62),
wherein at least one media conduit making up the third section (25; 33; 43; 53; 63) of the conduit bundle (20) is arranged in or on the fluid actuator (17).

## Patentansprüche

1. Anordnung zum Verlagern einer kippbaren Kabineneinheit (11) eines Kraftfahrzeugs zwischen einer abgesenkten und einer angehobenen Position relativ zu einem Fahrzeugrahmen (16), wobei die Anordnung einen Fluidaktuator umfasst, der zwischen dem Fahrzeugrahmen (16) und der Kabineneinheit (11) montierbar ist, wobei der Fluidaktuator (17) angeordnet ist, um die Kabineneinheit (11) zwischen den abgesenkten und angehobenen Positionen zu verlagern, und ein längliches Leitungsbündel (20), umfassend mindestens eine Medienleitung (23, 24, 25), die eine erste Sektion (23; 31; 41; 51; 71) hat, die verbindbar ist mit dem Fahrzeugrahmen (16), eine zweite Sektion (24; 32; 42; 52; 62), die verbindbar ist mit der Kabineneinheit (11), **dadurch gekennzeichnet, dass** die mindestens eine Medienleitung (23, 24, 25) eine dritte Sektion (25; 33; 43; 53; 63) umfasst, die zwischen die oben genannten ersten und zweiten Sektionen (23; 31; 41; 51; 71, 24; 32; 42; 52; 62; 72) eingepasst ist, wobei die mindestens eine Leitung, die eine dritte Sektion (25; 33; 43; 53; 63) der Medienleitung (23, 24, 25) ausmacht, in oder auf dem Fluidaktuator (17; 30; 40; 50; 60) angeordnet ist.

2. Anordnung nach Anspruch 1, **dadurch gekennzeichnet, dass** die mindestens eine Medienleitung, die die dritte Sektion (25; 33; 43; 63) ausmacht, in einer Kavität angeordnet ist, die sich durch den Fluidaktuator erstreckt.

3. Anordnung nach Anspruch 1 oder 2, **dadurch gekennzeichnet, dass** der Fluidaktuator eine Kolben-Zylinder-Anordnung (30; 50) ist.

4. Anordnung nach Anspruch 1 oder 2, **dadurch gekennzeichnet, dass** der Fluidaktuator ein teleskopischer Zylinder (40; 60) ist.

5. Anordnung nach einem der vorstehenden Ansprüche, **dadurch gekennzeichnet, dass** die mindestens eine Medienleitung (34; 44, 48; 54; 64), die in dem Fluidaktuator angeordnet ist, teleskopisch ist.

6. Anordnung nach Anspruch 5, **dadurch gekennzeichnet, dass** die mindestens eine teleskopische Medienleitung (44, 45) dieselbe Anzahl an Stufen (S1, S2) umfasst, wie der Fluidaktuator (40).

7. Anordnung nach einem der vorstehenden Ansprüche, **dadurch gekennzeichnet, dass** die mindestens eine Medienleitung, angeordnet in dem Fluidaktuator, hydraulische und/oder pneumatische Medien enthält.

8. Anordnung nach Anspruch 3, **dadurch gekennzeichnet, dass** jedes Ende des Fluidaktuators Verbinder für hydraulische und/oder pneumatische Medien umfasst, geliefert durch den Aktuator.

9. Anordnung nach einem der vorstehenden Ansprüche, **dadurch gekennzeichnet, dass** die mindestens eine Medienleitung, angeordnet in dem Fluidaktuator, elektrische Medien enthält.

10. Anordnung nach Anspruch 9, **dadurch gekennzeichnet, dass** die Medienleitung, die elektrische Medien enthält, ausfahrbar und einfahrbar mit dem Fluidaktuator ist.

11. Anordnung nach einem der vorstehenden Ansprüche, **dadurch gekennzeichnet, dass** mindestens eine Medienleitung, die die dritte Sektion (24) des Leitungsbündels (20) ausmacht, auf der äußeren Oberfläche des Fluidaktuators montiert ist.

12. Anordnung nach Anspruch 11, **dadurch gekennzeichnet, dass** die mindestens eine Medienleitung teleskopisch ist und angeordnet parallel zu dem Fluidaktuator.

13. Anordnung nach Anspruch 11 oder 12, **dadurch gekennzeichnet, dass** die mindestens eine Medienleitung ausfahrbar und einfahrbar mit dem Fluidaktuator ist.

14. Kraftfahrzeug, umfassend einen Fahrzeugrahmen (16); eine Kabineneinheit (11), die einen Fahrersitz umfasst und die an dem Fahrzeugrahmen (16) artikuliert ist über ein Schwenkgelenk (19) und kippbar in Bezug auf den Fahrzeugrahmen (16) zwischen einer abgesenkten Position und einer angehobenen Position; einen Fluidaktuator (17), montiert zwischen dem Fahrzeugrahmen (16) und der Kabineneinheit (11), wobei der Fluidaktuator (17) angeordnet ist, um die Kabineneinheit (11) zwischen den abgesenkten und angehobenen Positionen zu verlagern, und ein längliches Leitungsbündel (20), umfassend mindestens eine Medienleitung, wobei eine solche Leitung eine erste Sektion (23; 31; 41; 51; 71) hat, die auf den Fahrzeugrahmen (16) eingepasst ist, eine zweite Sektion (24; 32; 42; 52; 62), die auf die Kabineneinheit (11) eingepasst ist, **dadurch gekennzeichnet, dass** mindestens eine Medienleitung (23, 24, 25) eine dritte Sektion (25; 33; 43; 53; 63) umfasst, die zwischen den oben genannten ersten und zweiten Sektionen (23; 31; 41; 51; 71, 24; 32; 42; 52; 62) eingepasst ist, wobei mindestens eine Medienleitung, die die dritte Sektion (25; 33; 43; 53; 63) des Leitungsbündels (20) ausmacht, in oder auf dem Fluidaktuator (17) angeordnet ist.

## Revendications

1. Agencement pour déplacer une unité de cabine inclinable (11) d'un véhicule automobile entre une position abaissée et une position surélevée par rapport à un châssis de véhicule (16), l'agencement comprenant un actionneur à fluide pouvant être monté entre le châssis de véhicule (16) et l'unité de cabine (11), lequel actionneur à fluide (17) est agencé pour déplacer l'unité de cabine (11) entre les positions abaissée et surélevée, et un faisceau de conduits allongé (20) comprenant au moins un conduit de milieu (23, 24, 25) ayant une première section (23 ; 31 ; 41 ; 51 ; 71) qui peut être connecté au châssis de véhicule (16), une seconde section (24 ; 32 ; 42 ; 52 ; 62) qui peut être connectée à l'unité de cabine (11), **caractérisé en ce que** ledit au moins un conduit de milieu (23, 24, 25) comprend une troisième section (25 ; 33 ; 43 ; 53 ; 63) qui est montée entre les première et seconde sections mentionnées ci-dessus (23 ; 31 ; 41 ; 51 ; 71 , 24 ; 32 ; 42 ; 52 ; 62 ; 72), dans lequel au moins un conduit constituant une troisième section (25 ; 33 ; 43 ; 53 ; 63) du conduit de milieu (23, 24, 25) est agencé dans ou sur l'actionneur à fluide (17 ; 30 ; 40 ; 50 ; 60).

2. Agencement selon la revendication 1, **caractérisé en ce qu'**au moins un conduit de milieu constituant la troisième section (25 ; 33 ; 43 ; 63) est agencé dans une cavité s'étendant à travers l'actionneur à fluide.

3. Agencement selon la revendication 1 ou 2, **caractérisé en ce que** l'actionneur à fluide est un agencement piston-cylindre (30 ; 50).

4. Agencement selon la revendication 1 ou 2, **caractérisé en ce que** l'actionneur à fluide est un vérin télescopique (40 ; 60).

5. Agencement selon l'une quelconque des revendications précédente, **caractérisé en ce que** le au moins un conduit de fluide (34 ; 44, 48 ; 54 ; 64) agencé dans l'actionneur à fluide est télescopique.

6. Agencement selon la revendication 5, **caractérisé en ce que** le au moins un conduit de milieu télescopique (44, 45) comprend le même nombre d'étages (S1, S2) que l'actionneur à fluide (40).

7. Agencement selon l'une quelconque des revendications précédentes, **caractérisé en ce que** le au moins un conduit de milieu disposé dans l'actionneur à fluide contient un milieu hydraulique et/ou pneumatique.

8. Agencement selon la revendication 3, **caractérisé en ce que** chaque extrémité de l'actionneur à fluide comprend des connecteurs pour un milieu hydraulique et/ou pneumatique alimenté à travers l'actionneur.

9. Agencement selon l'une quelconque des revendications précédente, **caractérisé en ce que** le au moins un conduit de milieu agencé dans l'actionneur à fluide contient un milieu électrique.

10. Agencement selon la revendication 9, **caractérisé en ce que** le conduit de support contenant le milieu électrique est extensible et rétractable avec l'actionneur à fluide.

11. Agencement selon l'une quelconque des revendications précédentes, **caractérisé en ce qu'**au moins un conduit de fluide constituant la troisième section (24) du faisceau de conduits (20) est monté sur la surface extérieure de l'actionneur à fluide.

12. Agencement selon la revendication 11, **caractérisé en ce que** le au moins un conduit de milieu est télescopique et disposé parallèlement à l'actionneur à fluide.

13. Agencement selon la revendication 11 ou 12, **caractérisé en ce que** le au moins un conduit de milieu est extensible et rétractable avec l'actionneur à fluide.

14. Véhicule automobile comprenant un châssis de véhicule (16) ; une unité de cabine (11) qui comprend un siège de conducteur et qui est articulée par rapport au châssis de véhicule (16) par l'intermédiaire d'une articulation pivotante (19) et pouvant être inclinée par rapport au châssis du véhicule (16) entre une position abaissée et une position surélevée ; un actionneur à fluide (17) monté entre le châssis de véhicule (16) et l'unité de cabine (11), lequel actionneur à fluide (17) est agencé pour déplacer l'unité de cabine (11) entre les positions abaissée et surélevée, et un faisceau de conduits allongé (20) comprenant au moins un conduit de milieu, un tel conduit ayant une première section (23 ; 31 ; 41 ; 51 ; 71) qui est montée sur le châssis de véhicule (16), une seconde section (24 ; 32 ; 42 ; 52 ; 62) qui est montée sur l'unité de cabine (11), **caractérisé en ce que** ledit au moins un conduit de milieu (23, 24, 25) comprend une troisième section (25 ; 33 ; 43 ; 53 ; 63) qui est montée entre les première et deuxième sections mentionnées ci-dessus (23 ; 31 ; 41 ; 51 ; 71, 24 ; 32 ; 42 ; 52 ; 62),
dans lequel au moins un conduit de milieu constituant la troisième section (25 ; 33 ; 43 ; 53 ; 63) du faisceau de conduits (20) est agencé dans ou sur l'actionneur à fluide (17).
